# EUROPÄISCHE PATENTSCHRIFT

(11) **EP 0 904 324 B1**
(45) Veröffentlichungstag und Bekanntmachung des Hinweises auf die Patenterteilung: **22.08.2001**
(21) Anmeldenummer: 97923979.5
(22) Anmeldetag: 22.05.1997
(51) Int. Cl.: C09D 5/44

(54) **VERFAHREN ZUR BESCHICHTUNG ELEKTRISCH LEITFÄHIGER SUBSTRATE**
METHOD OF COATING ELECTRICALLY CONDUCTIVE SUBSTRATES
PROCEDE PERMETTANT DE RECOUVRIR DES SUBSTRATS ELECTROCONDUCTEURS

(30) Priorität: 03.06.1996 DE 19622221
(43) Veröffentlichungstag der Anmeldung: 31.03.1999
(73) Patentinhaber: Cognis Deutschland GmbH, 40589 Düsseldorf (DE)
(72) Erfinder: HÖFER, Rainer, D-40477 Düsseldorf (DE); SCHULTE, Heinz-Günther, D-45481 Mülheim an der Ruhr (DE); FROMMELIUS, Harald, D-40789 Monheim (DE)
(86) Internationale Anmeldenummer: EP9702621
(87) Internationale Veröffentlichungsnummer: WO9746628

(56) Entgegenhaltungen:
- EP-A- 0 109 760
- EP-A- 0 339 795
- EP-A- 0 640 699

## Beschreibung

Die Erfindung betrifft ein Verfahren zur Verhinderung von Schaumbildung bei der kationischen elektrophoretischen Beschichtung, wobei spezielle Polyalkylenoxid-Verbindungen eingesetzt werden, die eine Löslichkeit von mehr als 50 Gewichtsteilen in 100 Gewichtsteilen Wasser aufweisen. Weiterhin betrifft die Erfindung Elektrotauchlackbäder mit einem Gehalt an speziellen Polyalkylenoxid-Verbindungen, die sich durch besonders geringe Schäumungsneigung bei Agitation auszeichnen.

### Stand der Technik

Die Beschichtung leitfähiger Substrate mittels Kataphorese oder auch kathodischer Elektrotauchlackierung hat Eingang in nahezu alle Sparten der Serienlackierung gefunden. Ihr Hauptanwendungsgebiet liegt in den meisten Ländern auf dem Automobilsektor, wo die wesentlichen Vorteile dieses Beschichtungsverfahrens besonders ins Gewicht fallen. So lassen sich durch die Tauchlackierung weitgehend störungsfreie, gleichmäßige Beschichtungen erzielen, und selbst die Hohlraumbeschichtung ist problemlos möglich.

Bei der kathodischen Elektrotauchlackierung (KTL) wird das Substrat in ein wäßriges Bad, das sogenannte Elektrotauchlackbad oder KTL-Bad getaucht und als Kathode geschaltet. Durch Anlegen von Gleichstrom scheidet sich dann das Bindemittel aus dem Bad auf dem Substrat ab. Anschließend wird das abgeschiedene Bindemittel durch Einbrennen oder andere Methoden ausgehärtet.

Bei den Anlagen zur kationischen elektrophoretischen Beschichtung (KTL) handelt es sich um erweiterte Tauchanlagen. Das Werkstück wird mit Elektroden versehen und bei Spannungen von 100 bis 500 V und Stromdichten von 0,01 bis 5 A/dm² während einer Kontaktzeit von ca. 1 bis 4 Minuten im Tauchbecken beschichtet. Die Beckenvolumina betragen beispielsweise im Automobilbereich zwischen 50 und 450 t.

Nach dem Auftauchen durchlaufen die beschichteten Objekte eine Spülzone zur Entfernung nicht abgeschiedenen Tauchfilms sowie Abblas- und Trocknungszonen.

Schaumbildung ist eine häufige Begleiterscheinung bei der Produktion und Anwendung wäßriger Polymersysteme. Der Schaum wird durch die Anwesenheit von Tensiden erzeugt und stabilisiert. Derartige oberflächenaktive Substanzen sind in nahezu jeder wäßrigen Lackzubereitung enthalten. So gehören zu dieser Stoffgruppe beispielsweise Emulgatoren, Netzmittel, Dispergatoren und polymere Tenside wie sie z.B. die in KTL-Beschichtungsmitteln verwendeten, geladenen Bindemittel darstellen. Tenside entfalten ihre Wirkung, indem sie an die Phasengrenze zwischen zwei in der Regel nicht oder nur schlecht mischbare Komponenten wandern und dort die Oberflächenspannung reduzieren. Dieser zur Erzeugung von Dispersionen notwendige Mechanismus beinhaltet jedoch als Nebeneffekt die Tendenz, eingeschlossene Gasblasen, insbesondere Luftblasen, zu stabilisieren und zu dispergieren. Ein Eintrag von Gasen in eine tensidhaltige Lösung führt daher oft zu Schaumbildung. Ein solcher Vorgang kann sich beispielsweise während der Produktion beim innigen Durchmischen des Beschichtungsmittels oder bei der Anwendung des Beschichtungsmittels in unterschiedlichsten Formen abspielen. So kann im Falle der KTL beispielsweise beim Ein- oder Ausbringen des Werkstücks, beim Waschen desselben sowie beim Befüllen des Tauchbades mit Beschichtungsmittel Luft in disperser Form eingetragen werden, die in nicht erfindungsgemäßen Beschichtungsmitteln häufig zur Ausbildung eines voluminösen, stabilen Schaumes führt.

Eine solche Schaumbildung kann je nach Stabilität des Schaumes zu unerwünschten Effekten wie beispielsweise dem Überlaufen des Tauchbeckens, der Oberflächenverschmutzung der Werkstücke sowie Unregelmäßigkeiten im Farbauftrag und damit Produktionsunterbrechungen führen.

Um diesem Problem zu begegnen, hat sich die Zugabe vom Entschäumern zu Beschichtungsmitteln bewährt. Ein solcher Entschäumer enthält üblicherweise Substanzen, die in die Stabilisierungsmechanismen des Schaums eingreifen. Die üblicherweise benutzten Aktivsubstanzen entfalten dabei ihre Wirkung, indem sie sich aufgrund ihrer Inkompatibilität an der ursprünglichen Phasengrenze ausbreiten. Ein weiterer Mechanismus zur Zerstörung von unerwünschtem Schaum besteht in der Absorption von Tensiden an der Phasengrenze durch Eintrag hydrophober Kieselsäure. Oft wird auch eine Kombination dieser Wirkmechanismen in Mischpräparaten erreicht. So werden beispielsweise aliphatische und aromatische Mineralöle als Trägerflüssigkeiten zum Transfer von Aktivsubstanzen in das ansonsten hydrophile Medium benutzt. Die Auswahl der Aktivsubstanzen wird durch den angestrebten Wirkungsbereich vorgegeben. Während ein mineralölbasierender Entschäumer für wenig- bis mittelglänzende Lacke auf Acrylbasis, Styrol-Acrylbasis oder wasserbasierende Emulsionspolymerisate geeignet ist, kann diese Form des Entschäumens in Hochglanzlacken einen deutlichen Rückgang des Glanzes bewirken.

In **Journal of Coatings Technology , Vol. 66, 47 ff. (Februar 1994)** wird gelehrt, daß ein Entschäumer immer einen gewissen Grad der Inkomptibilität mit dem zu entschäumenden Medium aufweisen muß, da er sonst nicht zur Zerstörung der Schaummizelle an die Phasengrenze wandert. Der Nachteil dieser Inkompatibilität liegt jedoch in der Gefahr, daß durch eben solche Zusätze Oberflächendefekte wie "Fischaugen" und "Krater" entstehen können. Ein weiteres, durch Inkompatibilität verursachtes Problem, besteht in der komplizierten Einarbeitung des Entschäumers in das zu entschäumende Medium. Bei hoher Unverträglichkeit besteht die Notwendigkeit, den Entschäumer mechanisch in das Medium einzuarbeiten, wobei die Schergeschwindigkeit bei der Erstellung der Dispersion eine große Rolle spielt. Bei zu hoher Schergeschwindigkeit können die Entschäumertropfen zu klein werden und damit ihre Wirkung verlieren, was zu einer höheren Dosierung führen kann. Bei zu kleiner Schergeschwindigkeit und damit zu großen Entschäumertropfen neigt das resultierende Beschichtungsmittel zu Kraterbildung und zu mangelndem Verlauf.

Es besteht also der Bedarf nach einem solchen Entschäumersystem, das eine gute Entschäumerwirkung zeigt, die Filmbildung auf der zu beschichtenden Fläche nicht nachteilig beeinflußt und gute Einarbeitung gewährleistet.

**EP-B-339 795** beschreibt eine Methode zur Steigerung der erzielbaren Filmdicke bei der KTL. Als filmbildende Additive werden endgruppenverschlossene Polyether zugesetzt, die eine Wasserlöslichkeit von 0,1 bis 50 Gewichtsteilen in 100 Gewichtsteilen Wasser aufweisen. Bei höheren Werten der Löslichkeit wird gemäß der Lehre der EP-B-339 795 die Filmbildung gestört. Die Druckschrift macht keine Angaben über die Einarbeitbarkeit und das Schäumungsverhalten der Beschichtungsmittel.

**JP-B-06/045916** betrifft ein Verfahren zum Waschen von Werkstücken, die mit KTL lackiert wurden. Als Waschflüssigkeit wird hierbei die nach Ultrafiltration des Badinhalts erhältliche Regeneratflüssigkeit benutzt, die als Entschäumer Polypropylenglykol mit einem Molekulargewicht von 500 bis 1500 in einem Anteil von 5 bis 10.000 ppm enthält. Die Druckschrift erwähnt nicht den Einsatz ethylenoxidhaltiger Copolymere im Beschichtungsmittel selbst.

**JP-A-01/069678** betrifft ein Verfahren zur Verbesserung des Verlaufs von durch KTL erhältlichen Beschichtungen. Dem Beschichtungsmittel wird ein Polyalkylenglykol mit einem Molekulargewicht von 1.500 bis 6.000 in Mengen von 0,25 bis 7 Gew.-% zugesetzt. Über die Wasserlöslichkeit des Polyalkylenglykols, die Einarbeitbarkeit des Verlaufshilfsmittels sowie über die Schäumungseigenschaften der resultierenden Lösung werden keine Angaben gemacht.

**WO 90/07967** offenbart Antischaummittel, enthaltend 33 bis 89 Gew.-% eines C₁₆₋₂₂-Fettsäure(mono-bis-penta)ethoxylats oder -(mono-bis-penta)propoxylats und 67 bis 11 Gew.-% eines Blockpolymeren des Propylenoxids mit Ethylenoxid mit einem Molekulargewicht von etwa 3800, einem Trübungspunkt (berechnet als 10-%ige wäßrige Lösung) von 9° C bis 13° C und einem HLB-Wert von etwa 1 sowie deren Verwendung in der lackverarbeitenden Industrie, insbesondere bei der Lackierung von Kraftfahrzeugen, zur Schauminhibierung in Umlaufwasser von Naßabscheidern für Spritzlackieranlagen.

**US 5 124 074** beschreibt Antischaummittel, die eine Verbindung enthalten, die erhältlich ist durch Umsetzung spezieller mono-substituierter Polyalkylenglykole mit Oxyalkyleneinheiten mit einer Polyepoxidverbindung mit einem Polyalkylenoxidrest.

In der Monographie "Elektrophorese Lacke" (Kurt Weigel; Stuttgart 1967, Seiten 197 bis 199) heißt es: "Um keine unangenehmen Nebenwirkungen zu erhalten, muß bei der Auswahl von Antischaummitteln ebenfalls außerordentlich vorsichtig vorgegangen werden." (Seite 198, Zeilen 2 bis 4). Weiterhin wird betont, daß im allgemeinen Silikonentschäumer bei der elektrophoretischen Beschichtung ungeeignet sind und auf jeden Fall zu prüfen sei, welcher Entschäumer für ein bestimmtes System optimale Wirkung vermittelt (Seite 198, erster Absatz). Diese Aussagen bestätigen die dem Fachmann bekannte Tatsache, daß man von der Eignung einer bestimmten Substanzklasse als Entschäumer bei der elektrophoretischen Beschichtung nicht auf die Eignung anderer Substanzklassen für denselben Anwendungszweck schließen kann. Insbesondere entnimmt der Fachmann der genannten Monographie, daß sich nicht automatisch ein beliebiger Stoff mit bestimmter entschäumender Grundwirkung, auch als Antischaummittel bei der kathodischen elektrophoretischen Beschichtung eignet.

Aus **EP-A-109 760** ist ein Verfahren zur Beschichtung elektrisch leitfähiger Substrate bekannt, bei dem das Substrat in eine wäßrige Zusammensetzung getaucht wird, die ein dispergiertes Beschichtungsmaterial enthält.
Das Beschichtungsmaterial enthält ein filmbildendes Polymer, welches wiederum ein nichtionisches, hydrophiles Polymer enthält oder mit einem solchen assoziiert ist. Dieses hydrophile Polymer ist beispielsweise Polyethlenglykol oder dessen Monoalkylether.

### Beschreibung der Erfindung

Aufgabe der vorliegenden Erfindung war es, Substanzen bereitzustellen, die in der Lage sind, eine effektive Entschäumung im Zuge der kationischen elektrophoretischen Beschichtung zu gewährleisten. Dabei sollten beim Einsatz dieser Substanzen die üblichen Qualitätsmerkmale kationischer elektrophoretischer Beschichtungen, insbesondere eine gute Filmbildung, nicht negativ beeinflußt werden.

Es wurde nun gefunden, daß spezielle Polyether, deren OH-Endgruppen teilweise oder vollständig mit geeigneten Reagenzien verschlossen wurden, und die eine Wasserlöslichkeit von mehr als 50 Gewichtsteilen in 100 Gewichtsteilen Wasser aufweisen, ausgezeichnete Entschäumungseigenschaften in üblichen Tauchlackbädern gewährleisten.

Gegenstand der Erfindung ist zunächst ein **Verfahren** zur Beschichtung elektrisch leitfähiger Substrate, bei dem das Substrat in ein wäßriges Elektrotauchlackbad, das mindestens ein kathodisch abscheidbares Kunstharz enthält, eingetaucht wird, das Substrat als Kathode geschaltet wird, durch Gleichstrom ein Film auf dem Substrat abgeschieden wird, das Substrat aus dem Elektrotauchlack entfernt wird und der abgeschiedene Lackfilm eingebrannt wird, wobei man dem Bad zur Kontrolle der Schaumbildung Polyalkylenoxid-Verbindungen mit einer Löslichkeit von mehr als 50 Gewichtsteilen in 100 Gewichtsteilen Wasser zusetzt.

Unter Polyalkylenoxid-Verbindungen werden im Rahmen der vorliegenden Erfindung Polyalkylenglykole verstanden, deren Oxyalkylgruppen 2 bis 4 C-Atome enthalten und deren OH-Endgruppen mit Carbonsäuren verestert oder mit Alkyl- oder Methylarylgruppen verethert sind. Diese Substanzen werden nachfolgend - abgeleitet von der Bezeichnung Polyalkylenoxid-Verbindungen - als **PAO-Verbindungen** bezeichnet. Bei den PAO-Verbindungen handelt es sich um von Polyalkylenglykolen abgeleitete Verbindungen, bei denen die OH-Endgruppen teilweise oder ganz durch Veresterung oder Veretherung verschlossen sind. Wie bereits gesagt, kommen jedoch erfindungsgemäß nur solche PAO-Verbindungen zum Einsatz, die eine Löslichkeit von mehr als 50 Gewichtsteilen in 100 Gewichtsteilen Wasser aufweisen. Dabei sind PAO-Verbindungen mit einer Löslichkeit von 55 bis 100 Gewichtsteilen in 100 Gewichtsteilen Wasser bevorzugt.

Den PAO-Verbindumgen liegen hydroxygruppenhaltig Verbindungen zu Grunde, beispielsweise diejenigen, die durch statistische oder blockweise Anlagerung eines Gemisches von Ethylenoxid und Propylenoxid an ein- oder mehrwertige Alkohole erhältlich sind.

Als Alkohole kommen dabei beispielsweise alle Hydroxygruppen tragenden aliphatischen und/oder aromatischen Kohlenwasserstoffe, Ether, Amine, Amide, Ketone oder Ester in Frage. Besonders bevorzugt sind die primären Alkanole mit 1 bis 36 C-Atomen, beispielsweise Methanol, Ethanol, Propanol, iso-Propanol, n-Butanol, iso-Butanol, tert.-Butanol, n-Pentanol, iso-Pentanol, Hexanol, 2-Ethylhexanol. Neben den gesättigten, linearen oder verzweigten Alkoholen können auch ungesättigte Alkohole wie Allylalkohol, Butenylalkohol, Pentenylalkohol sowie deren höhere Homologe und Isomere erfindungsgemäß eingesetzt werden.

Insbesondere bevorzugt ist jedoch der Einsatz solcher monofunktionellen Alkohole, die sich aus der Reduktion der Ester natürlicher Fettsäuren erhalten lassen. Typische Beispiele sind Capronalkohol, Caprylalkohol, 2-Ethylhexylalkohol, Caprinalkohol, Laurylalkohol, lsotridecylalkohol, Myristylalkohol, Cetylalkohol, Palmitylalkohol, Palmitoleylalkohol, Stearylalkohol, Isostearylalkohol, Oleylalkohol, Elaidylalkohol, Petroselinyl-alkohol, Linolylalkohol, Linolenylalkohol, Elaeostearylalkohol, Arachyl-alkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen.

Als polyfunktionelle Alkohole kommen solche in Frage, die eine Funktionalität von etwa 2 bis 10 aufweisen. Hierzu zählen beispielsweise Ethylenglycol, Propylenglycol, Butylenglycol, Glycerin, Oligo- und Polyglycerin, Trimethylolpropan, Sorbit, Pentaerythrit, Hydroxygruppen tragende natürliche Fette und Öle und/oder deren Derivate, Umesterungsprodukte natürlich vorkommender Öle und Fette mit polyfünktionellen Alkoholen sowie Glycoside. Erfindungsgemäß bevorzugt werden die niedermolekularen di- bis tetrafunktionellen Alkohole mit bis zu 6 C-Atomen, wie beispielsweise Ethylenglycol, Propylenglycol und/oder Glycerin eingesetzt.

Zur Erzielung einer im Sinne der Erfindung besonders guten Entschäumerwirkung sind beispielweise die nicht endgruppenverschlossenen Blockcopolyaddukte von insbesondere Ethylenoxid und Propylenoxid geeignet.

Die Herstellung dieser Blockcopolymeren erfolgt nach an sich bekannten Verfahren und wird vorzugsweise unter Druck und bei erhöhter Temperatur, beispielsweise 80°C bis 200°C, bevorzugt 100°C bis 180°C in Gegenwart saurer oder basischer Katalysatoren durchgeführt. Saure Katalysatoren sind beispielsweise die dem Fachmann bekannten Lewis-Säuren wie Bortrifluorid oder Aluminiumchlorid. Bevorzugt sind alkalische Katalysatoren wie beispielsweise die Alkoholate, Hydroxide, Oxide, Carbonate, Hydride oder Amide von Alkali oder Erdalkalimetallen. Besonders bevorzugt sind die Alkoholate, beispielsweise die Methylate oder Ethylate sowie die Hydroxide des Lithiums, Natriums und/oder Kaliums.

Die Zusammensetzung der Blockcopolymeren hinsichtlich der Anteile an Ethylenoxid und Propylenoxideinheiten kann in weiten Grenzen variieren. So kann das Verhältnis von Ethylenoxid- zu Propylenoxideinheiten zwischen 1:10 und 10:1 liegen.

Die genannten hydroxygruppenhaltigen Verbindungen können mit Carbonsäuren und/oder deren Anhydriden verestert werden, um einen Verschluß der OH-Gruppe zu erreichen. Die Veresterungsreaktion kann mit aliphatischen oder aromatischen Carbonsäuren, die 2 bis 18 C-Atome aufweisen, durchgeführt werden. Beispiele hierfür sind die Essigsäure, Propansäure, Buttersäure, Valeriansäure, Capronsäure, Önanthsäure, Caprylsäure, Pelargonsäure, Decansäure, Laurinsäure, Myristinsäure, Palmitinsäure oder Stearinsäure.

Die Veresterung der Carbonsäuren kann dabei in an sich bekannter Weise unter saurer Katalyse erfolgen. Als saure Katalysatoren kommen beispielsweise Schwefelsäure, Methansulfonsäure, p-Toluolsulfonsäure oder tensidische Sulfonsäuren in Frage, weiterhin hat sich Zinnschliff als Katalysator bewährt. Die Veresterungsreaktion kann bei Temperaturen von 80°C bis 120°C, vorzugsweise bei Temperaturen von 90°C bis 110°C durchgeführt werden. Der saure Katalysator kann gewünschtenfalls nach Abschluß der Veresterung neutralisiert und/oder abgetrennt werden. Das Verhältnis von OH-Gruppen zu Carbonsäure kann so eingestellt werden, daß beispielsweise nur eine anteilige Veresterung stattfindet. Bevorzugt werden jedoch solche Produkte eingesetzt, deren OH-Gruppen vollständig verestert sind. Insbesondere werden solche Produkte bevorzugt eingesetzt, die Ester von Ethoxylierungs- und/oder Propoxylierungsprodukten mono- oder difunktioneller Alkohole darstellen.

Anstatt der Veresterung kann als endgruppenverschließende Reaktion auch die Veretherung gewählt werden. Hierzu werden die genannten hydroxygruppenhaltigen Verbindungen unter den Bedingungen der Williamson'schen Ethersynthese mit aromatischen oder aliphatischen, geradkettigen oder verzweigten Alkylhalogeniden, jedoch vorzugsweise mit 4 bis 8 C-Atomen, umgesetzt. Dazu zählen beispielsweise Methylchlorid, n-Butylchlorid, sec.-Butylbromid, tert.-Butylchlorid, Amylchlorid, tert.-Amylbromid, n-Hexylchlorid, n-Heptylbromid, n-Octylchlorid und Benzylchlorid. Auf diese Weise lassen sich die OH-Endgruppen mono- oder polyfunktioneller Alkohole sowohl teilweise als auch vollständig verethern. Um vollständigen Umsatz zu erzielen, kann es zweckmäßig sein, Alkylhalogenid und Alkali im Überschuß einzusetzen.

Der Einsatz der erfindungsgemäßen PAO-Verbindungen ermöglicht eine äußerst effektive Kontrolle des Schaumverhaltens der Elektrotauchlackbäder, bei gleichzeitig hervorragender Filmbildung. Darüber hinaus wurde beobachtet, daß sich die erfindungsgemäß einzusetzenden PAO-Verbindungen sehr leicht in übliche Elektrotauchlackbäder einarbeiten lassen, das heißt, daß sie mit den in diesen Bädern vorhandenen Komponenten kompatibel sind.

Ganz besonders bevorzugt sind im Rahmen der vorliegenden Erfindung solche PAO-Verbindungen, die durch die allgemeine Formel (I) gekennzeichnet sind

R¹ - O - (CH₂CH₂O)ₙ- R² (I)

in der R¹ einen geradkettigen oder verzweigten Alkylrest oder Alkenylrest mit 8 bis 18 C-Atomen, R² einen Alkylrest mit 4 bis 8 C-Atomen und n eine Zahl von 7 bis 30 bedeuten. PAO-Verbindungen der allgemeinen Formel (I), bei denen der Rest R² einen n-Butylrest bedeutet, sind im Rahmen der vorliegenden Erfindung ganz besonders bevorzugt.

Die PAO-Verbindungen werden in Elektrotauchlackbädern vorzugsweise in einer Menge eingesetzt, die 0,01 bis 15 Gew.-% - bezogen auf dem Festkörperanteil im Elektrotauchlackbad - entspricht. Dabei sind Mengen im Bereich von 0,1 bis 3 Gew.-% und insbesondere von 0,15 bis 2 Gew.-% besonders bevorzugt. Im Rahmen der angegebenen Mengenbereiche ist dabei anzustreben, eine möglichst niedrige, wirksame Entschäumerkonzentration einzusetzen.

Ein weiterer Gegenstand der vorliegenden Erfindung sind **Elektrotauchlackbäder** enthaltend als entschäumende Komponente Verbindungen der allgemeinen Formel (I)

R¹ - O - (CH₂CH₂O)ₙ - R² (I)

in der R¹ einen geradkettigen oder verzweigten Alkylrest oder Alkenylrest mit 8 bis 18 C-Atomen, R² einen Alkylrest mit 4 bis 8 C-Atomen und n eine Zahl von 7 bis 30 bedeuten.

Die erfindungsgemäßen Elektrotauchlackbäder können dabei alle hierfür üblichen Bindemittel, Vernetzer, Pigmente, Katalysatoren und Additive enthalten.

Elektrotauchlackbäder enthalten üblicherweise ein kationisches, durch elektrischen Strom abscheidbares Harz als **Bindemittel,** das für die filmbildenden Eigenschaften des Beschichtungsmittels verantwortlich ist. Derartige Bindemittel werden üblicherweise durch Mischen eines Reaktionsproduktes aus einem Epoxyharz vom Bisphenol-A-Epichlorhydrin-Typ und primärem und/oder sekundärem Amin und/oder Amid mit einer Isocyanatverbindung, die gegebenenfalls blockierte Isocyanatgruppen aufweist, erhalten wurde. Die Blockierung der Isocyanatgruppen kann dabei in einer dem Fachmann an sich bekannten Weise geschehen. Zur Blockierung können im Prinzip alle für Polyisocyanate geeigneten Blockierungsmittel, beispielsweise lineare, gegebenenfalls verzweigte aliphatische oder cycloaliphatische monofunktionelle Alkohole mit 1 bis 12 C-Atomen eingesetzt werden. Es kann sich dabei auch um technische Alkoholschnitte handeln, die Gemische aus zwei oder mehreren der o.g. Alkohole darstellen. Die zum Einsatz kommenden Alkohole müssen nicht an sich monofunktionell sein, es sind auch solche polyfunktionellen Alkohole einsetzbar, deren OH-Gruppen bis auf eine durch Veresterung, Veretherung, Acetalisierung, inter- und intramolekulare Cyclisierung oder weitere, zum gleichen Ergebnis führende Reaktionen verschlossen sind. Beispiele für solche Alkohole sind Methanol, Ethanol, Propanol, Butanol, Pentanol, 2-Ethylhexanol, Trimethylolpropandiethylether, Trimethylolpropandiallylether, Pentaerythrittriallylether, Hexanol, Heptanol und Isodecanol.

Bezüglich der einsetzbaren Polyamine und -amide besteht hinsichtlich der Reaktionsbedingungen unter denen sie hergestellt wurden keine Einschränkung, sofern es sich um ein Reaktionsprodukt zwischen einer basischen Aminoverbindung und einem Epoxyharz handelt. Verwendet werden insbesondere solche Epoxyharze, die aus Phenolverbindungen und Epichlorhydrin erhältlich sind und gewöhnlich ein Molekulargewicht von etwa 400 bis 2000 besitzen. Typische Beispiele für solche Harze sind die Umsetzungsprodukte aus Bisphenol-A und Epichlorhydrin, Bisphenol-A und β-Methylepichlorhydrin oder Polyglycidylether von Novolakharzen. Beispiele für die mit dem Epoxyharz umzusetzenden basischen Aminoverbindungen sind aliphatische oder alicyclische Aminoverbindungen, die eine primäre oder sekundäre Aminogruppe aufweisen. Bevorzugte Beispiele sind Monoamine wie beispielsweise Mono- oder Dialkylamin, Mono- oder Dialkanolamine und Polyamine, wie beispielsweise Polyalkylenpolyamine. Verwendbare Monoamine sind Mono- oder Dialkylamine mit etwa 1 bis 18 Kohlenstoffatomen, wie beispielsweise Ethylamin, Propylamin, Butylamin, Diethylamin, Dipropylamin und weiteren homologen oder isomeren Stoffen. Beispiele für Mono- oder Dialkanolamine sind Äthanolamin, Propanolamin, Butanolamin, Diäthanolamin, Dipropanolamin, Äthanol-Propanolamin und weitere reine und/oder gemischte homologe und/oder isomere. Andere verwendbare Monoamine sind beispielsweise Piperidin, Cyclohexylamin, Pyrrolidin und Morpholin. Beispiele für verwendbare Polyamine sind Äthalendiamin, Hexamethylendiamin, Diethylentriamin, Triethylentetramin, Tetraethylenpentamin, Propylendiamin, Dipropylentriamin, Tripropylentetramin, Butylendiamin, Monoethylethylendiamin, Diethylaminopropylen-diamin, Hydroxyethylaminopropylamin, Monomethlyaminopropylamin, Piperazin, N-Methylpiperazin sowie N-Aminoethylpiperazin. Ebenso lassen sich aliphatische Mono- oder Polyamine mit einer sekundären Aminogruppe zur Herstellung derartiger Harze benutzen.

Die Reaktion der Epoxyharze mit einer oder mehreren der basischen Aminoverbindungen wird in der Regel durch einfaches Vermischen der Komponenten bei Raumtemperatur erreicht. Zur Beschleunigung der Reaktion kann das Reaktionssystem jedoch auch auf eine Temperatur von 50 bis 150 °C erwärmt werden. Üblicherweise wird dem Epoxyharz die Aminoverbindung in einer solchen Menge zugegeben, daß eine Gelbildung vermieden wird.

Das harzartige Bindemittel wird in der Regel durch Neutralisation mit einer Säure wasserlöslich oder dispergierbar gemacht. Zur Neutralisation werden üblicherweise Säuren wie beispielsweise Ameisensäure, Essigsäure, Propionsäure, Hydroxyessigsäure, Milchsäure, Salzsäure, Schwefelsäure oder Phosphorsäure eingesetzt, wobei die Verwendung organischer Säuren, insbesondere von Milchsäure, bevorzugt ist. Die Säuren werden vorzugsweise in einer solchen Menge eingesetzt, daß die Anzahl der neutralisierten Gruppen pro Molekül ausreicht um mindestens die Dispergierbarkeit des Bindemittels in Wasser oder einem wässrigen Lösungsmittel zu erlauben. Die Neutralisationszahl der zur Protonierung des Bindemittels eingesetzten Säure liegt im Allgemeinen bei etwa 5 bis 40 mg KOH pro Gramm Harzfeststoff, wobei in der Regel ein Bereich zwischen 10 und 20 mg im Hinblick auf die Eigenschaften bei der Elektrokoagulierung bevorzugt ist.

Als Lösemittel dient üblicherweise Wasser oder ein Gemisch aus Wasser und einem organischen Lösemittel. Verwendbare organische Lösemittel sind diejenigen niedermolekularen Substanzen, die eine vorzugsweise unbegrenzte oder nahezu unbegrenzte Mischbarkeit mit Wasser aufweisen, wie beispielsweise Ethanol, Propanol, iso-Propanol, iso-Butanol, Ethylenglycol oder Ethylenglycolmonomethylether. Das Lösemittel kann in einer Menge von 0 bis 50 Gew.-% bezogen auf die Wassermenge, vorzugsweise jedoch in einer Menge von 5 bis 20 Gew.-% eingesetzt werden. Beispielhafte Verfahren zur Darstellung solcher Bindemittel finden sich z.B. in **DE-C-25 41 234, EP-B-536166, DE-A-39 41 018** und **DE-A-34 36 345.** Die erfindungsgemäßen PAO-Verbindungen können diesen Bindemitteln auch bereits bei der Herstellung oder nach der Herstellung zugegeben werden.

Die elektrophoretische Auftragung bewirkt eine Koagulation des Bindemittels an der Kathode, an der sich bei Stromfluß eine stark basische Schicht ausbildet. Infolge der parallel zur Abscheidung ablaufenden elektroosmotischen Vorgänge ist die Beschichtung üblicherweise bereits kurz nach der Abscheidung griffest.

Bekannte Verfahren die sich zur kathodischen Abscheidung der beschriebenen Harze aus wäßrigen Dispersionen eignen, können auch bei den erfindungsgemäßen Bindemittelzubereitungen angewandt werden. Zweckmäßigerweise wird hierzu das leitfähige Substrat als Kathode und eine Platte aus rostfreiem Stahl oder Kohlenstoff als Anode verwendet. Die Bedingungen zur Abscheidung unterliegen insofern keinen Beschränkungen, als daß die zur Erzeugung eines gleichmäßigen, kraterfreien Films mit den gewünschten Eigenschaften bezüglich des Verlaufs und der mechanischen Eigenschaften notwendigen Parameter in weiten Grenzen in Abhängigkeit von den äußeren Bedingungen, wie beispielsweise den Konstruktionsmerkmalen der Anlage, variiert werden können. Übliche Bedingungen sind hierbei Spannungen von 100 bis 500 V und Stromdichten von 0,01 bis 5 A/dm² während einer Kontaktzeit von ca. 1 bis 4 Minuten. Das Flächenverhältnis der Elektroden beträgt üblicherweise zwischen 1:2 und 2:1 bei einer Entfernung zwischen den Elektroden von 10 bis 100 cm. Die Abscheidung des Bindemittels wird in der Regel unter Rühren des Bades durchgeführt.

Im Anschluß kann die abgeschiedene Überzugsmasse, vorzugsweise nach Entfernen nicht koagulierten Bindemittels in einem vorgeschalteten Waschschritt, durch Einbrennen verfestigt werden. Gegebenenfalls kann das Epoxyharz beispielsweise zur Verbesserung der Schlagfestigkeit mit Fettsäuren einer Kettenlänge von 6 bis 24, bevorzugt 12 bis 22 C-Atomen, oder die Isocyanatverbindung mit Alkoholen wie beispielsweise Polyetherpolyolen modifiziert sein.

Geeignete isocyanattragende Moleküle sind sowohl die niedermolekularen, aliphatischen und/oder aromatischen Diisocyanate als auch die durch Reaktionen mit bevorzugt zweiwertigen Alkoholen herstellbaren, sogenannten "kettenverlängerten" Isocyanate einsetzbar.

Beispielsweise seien als geeignete Isocyanate genannt 1,5 Naphtylendiisocyanat, 4,4'-Diphenylmethandiisocyanat (MDI), hydriertes MDI (H₁₂ MDI), Xylylendiisocyanat (XDI), Tetramethylxyloldiisocyanat (TMXDI), Di- und Tetraalkyldiphenylmethandiisocyanat, 4,4'-Dibenzyldiisocyanat, 1,3-Phenylendiisocyanat, 1,4-Phenylendiisocyanat, die Isomere des Toluylendiisocyanats (TDI), gegebenenfalls in Mischung, 1-Methyl-2,4-diisocyanatocyclohexan, 1,6-Diisocyanato-2,2,4-trimethylhexan, 1-Isocyanatomethyl-3-isocyanato-1,5,5-trimethyl-cylohexan, chlorierte und bromierte Diisocyanate, phosphorhaltige Diiso-cyanate, Tetramethoxybutan-1,4-diisocyanat, Tetramethylen-1,4-diiso-cyanat, Pentamethylen- 1,4-diisocyanat, Hexamethylen-1,4-diisocyanat (HDI), Phthalsäure-bis(isocyanatoethylester), Dicyclohexylmethandiisocyanat, 1,12-Diisocyanatododecan und Dimerfettsäurediisocyanat.

Als Dimerfettsäure bezeichnet man ein Gemisch von überwiegend C₃₆-Carbonsäuren, das durch thermische oder katalytische Dimerisierung ungesättigter C₁₈-Monocarbonsäuren, wie Ölsäure, Tallölfettsäure oder Linolsäure hergestellt wird. Die Dimerfettsäure läßt sich zu Dimerfettsäurediisocyanaten mit im Mittel zwei Isocyanatgruppen pro Molekül umsetzen.

Neben den niedermolekularen Polyisocyanaten können auch die sogenannten kettenverlängerten Isocyanate zum Einsatz gelangen. Diese Form der Polyisocyanate ist erhältlich durch Umsetzen von etwa x mol eines bevorzugt difunktionellen Alkohols mit etwa x+1 mol eines bevorzugt difunktionellen Diisocyanats.

Anstatt der reinen Komponenten können auch technische Produkte zum Einsatz kommen, die neben difunktionellen Molekülen auch noch solche mit höheren oder niedrigeren Funktionalitäten, beispielsweise 1 oder 3, beinhalten. Bevorzugt sind jedoch solche Produkte, deren Hauptanteil aus difunktionellen Molekülen besteht, so daß die Mischung als im Mittel difunktionell bezeichnet werden kann.

Die Zahl der Isocyanatgruppen pro Molekül des Reaktionsprodukts beträgt üblicherweise im Mittel zwei, während das Molgewicht des resultierenden Diisocyanats mit zunehmendem x ansteigt. Dabei kann x in der Regel Werte zwischen 1 und 10.000 annehmen.

Als difunktionelle Alkohole kommen Glycole wie Ethylenglycol, Propylenglycol, Butylenglycol und deren höhere Homologe infrage. Ebenso geeignet sind die Dimeralkohole, die durch Dimerisierung von Oleylalkohlen oder durch Reduktion der Ester der Dimerfettsäure erhältlich sind. Auch solche Alkohole und Alkoholschnitte die beispielsweise durch die Umesterung von Triglyceriden mit mono-, di- oder trifunktionellen Alkoholen erzeugt werden, und die im Mittel difunktionell sind, können eingesetzt werden.

Die auf diese Weise erhältlichen, kettenverlängerten Diisocyanate werden in der Regel mit monofunkionellen Polyetherpolyolen umgesetzt.

Bei diesen Polyetherpolyolen handelt es sich vorzugsweise um die Additionsprodukte von alpha-Epoxiden mit 2 bis 24 C-Atomen an monofunktionelle Alokhole mit 1 bis 24, vorzugsweise 6 bis 18 C-Atomen. Die resultierenden Polyetherpolyole können sowohl Homo- als auch Co- und Mischpolymerisationsprodukte sein.

Die erfindungsgemäßen Elektrotauchlackbäder, also die wäßrigen Lösungen oder Dispersionen der kationischen elektrophoretischen Beschichtungsmassen, können gegebenenfalls weitere Zusatzstoffe enthalten. Hierzu zählen beispielweise färbende und streckende **Pigmente.** Unter färbenden Pigmenten versteht der Fachmann beispielsweise rotes Eisenoxid, Titandioxid oder Ruß und dergleichen, während unter streckenden Pigmenten beispielsweise Ton, Glimmer, Talk oder Calciumcarbonat und ähnliches zu verstehen sind. Ferner sind als Zusatzstoffe **Härtungskatalysatoren** einsetzbar. Als solche eignen sich beispielsweise Acetate, Naphtenate, Oleate, Chromate, Phosphate und weitere Salze von Wismuth, Blei, Zinn, Eisen, Kobalt, Nickel, Aluminium, Zink, Mangan, Kupfer und Zirkonium. Weiterhin kann in der erfindungsgemäßen Beschichtungsmasse noch ein weiteres wasserlösliches, neutrales oder kationisches Harz enthalten sein. Hierzu zählen beispielsweise wasserlösliche Phenolharze, wasserlösliche Melaminharze, Polyacrylamide, Polyvinylalkohol, Polyvinylpyrrolidon, Copolymere enthaltend Dialkylaminoethylmethacrylat oder Dialkylamino-propylmethacrylat oder Additionsprodukte von Glycidylmethacrylat-Co-polymeren und sekundärem Amin.

Die **Bindemittel** werden üblicherweise in einer konzentrierten, hochviskosen bis pastösen Form angeboten die ca. 40 bis 70, vorzugsweise 45 bis 60 Gew.-% Bindemittel enthält und müssen zur endgültigen Verwendung verdünnt werden. Dies kann entweder im KTL-Bad selbst oder in einer dem Bad vorgeschalteten Verdünnungsstufe geschehen.

Die erfindungsgemäßen Elektrotauchlackbäder enthalten wie bereits gesagt einen Zusatz zur Verhinderung bzw. Unterdrückung von Schaum, einen sogenannten **Entschäumer**, nämlich die oben genannten speziellen Verbindungen aus der Gruppe der nichtionischen Tenside, die als PAO-Verbindungen bezeichnet wurden. Der Entschäumer kann entweder schon in der konzentrierten, pastösen Form des Beschichtungsmittels vorliegen oder in dieselbe eingearbeitet werden, oder erst im Laufe des Verdünnungsvorganges zugegeben werden. Ebenso ist es erfindungsgemäß möglich, den Entschäumer direkt in das Tauchbad zu geben, wobei bei dieser Methode darauf geachtet werden sollte, daß die Zugabe zur besseren Verteilung des Entschäumers an einer turbulenten Stelle des Bades stattfindet.

Gewünschtenfalls können die erfindungsgemäßen Elektrotauchlackbäder neben den bereits erwähnten Komponenten noch weitere übliche Zusatzstoffe enthalten, wie zum Beispiel Zusatzlösungsmittel, Antioxidatien, oberflächenaktive Mittel usw.

Der Festkörpergehalt der erfindungsgemäßen Elektrotauchlackbäder beträgt vorzugsweise 7 bis 35 Gew.-%, insbesondere 12 bis 25 Gew.-%.

Der pH-Wert der Elektrotauchlackbäder liegt im Bereich von 4 bis 8, vorzugsweise zwischen 5 und 7,5. Die erfindungsgemäßen Elektrotauchlackbäder lassen sich zum Überziehen von beliebigen elektrisch leitenden Substraten, insbesondere aber zum Überziehen von Metallen wie Stahl, Aluminium, Kupfer und dergleichen verwenden. Der Stahl kann verzinkt, phosphatiert, nicht-phosphatiert oder auf eine andere dem Fachmann bekannte Art und Weise vorbehandelt sein.

Die Temperatur des Elektrotauchlackbades sollte im Bereich zwischen 15 und 40 °C, vorzugsweise zwischen 25 und 35 °C liegen.

Die angelegte Spannung kann in einem großen Bereich schwanken und zum Beispiel zwischen 2 und 1.000 Volt liegen. Typischerweise wird aber mit Spannungen zwischen 50 und 500 Volt gearbeitet. Die Stromdichte liegt in der Regel zwischen etwa 10 und 3.000 Ampere/m². Im Verlauf der Abscheidung fällt dabei die Stromdichte ab.

Nach der Abscheidung wird der beschichtete Gegenstand abgespült und ist zum Einbrennen bereit.

Die abgeschiedenen Lackfilme werden im allgemeinen bei Temperaturen im Bereich von 130 bis 200 °C über eine Zeitdauer von 10 bis 60 Minuten, insbesondere 50 bis 180 °C über eine Zeitdauer von 15 bis 30 Minuten eingebrannt.

Vorzugsweise werden im Rahmen der vorliegenden Erfindung solche PAO-Verbindungen eingesetzt, deren Hydroxygruppen durch Ether- oder Esterbildung mit Alkoholen oder Carbonsäuren weitgehend oder vollständig verschlossen sind.

Die in dem erfindungsgemäßen Verfahren sowie in den erfindungsgemäßen Elektrotauchlackbädem einzusetzenden Polyalkylenoxid-Verbindungen sollten ein Molekulargewicht zwischen 300 und 5000 besitzen, wobei bevorzugt solche eingesetzt werden, die ein Molekulargewicht zwischen 400 und 2000 und insbesondere zwischen 500 und 1500 aufweisen.

Ein weiterer Gegenstand der Erfindung ist die Verwendung der oben beschriebenen PAO-Verbindungen zur Kontrolle der Schaumbildung in Elektrotauchlackbädern bei der kationischen elektrophoretischen Beschichtung.

Die folgenden Beispiele dienen der Erläuterung der Erfindung.

### Beispiele

Um die Effektivität der erfindungsgemäß einzusetzenden PAO-Verbindungen zur Schaum-Kontrolle zu überprüfen, wurde ein handelsübliches Elektrotauchlackbad mit verschiedenen Entschäumern verrührt und jeweils 100 ml der so hergestellten Entschäumer-haltigen Testrezepturen aus 100 cm Höhe bei 50 °C aus einem standardisierten Meßbecher (DIN 53211) in einen 500 ml Meßzylinder getropft. Die Höhe des gebildeten Schaums wurde daraufhin während einer halben Stunde in fünfminütigen Intervallen abgelesen. Die Ergebnisse sind - im Vergleich zu einem Elektrotauchlackbad ohne Entschäumer-Zusatz - in Tabelle 1 dargestellt:

**Tabelle 1**

| Schaumvolumen in ml (bei 50 °C) | | |
|---|---|---|
| **Meßzeit** | **Zusatz** | |
| | **ohne** | **E-1** |
| 0 min | 100 | 100 |
| 5 min | 30 | 10 |
| 10 min | 16 | 3 |
| 15 min | 12 | 2 |
| 20 min | 10 | 2 |
| 25 min | 10 | 2 |
| 30 min | 9 | 1 |

Bei der Prüfsubstanz E-1 handelt es sich um eine PAO-Verbindung der o.g. allgemeinen Formel (I), bei der R¹ ein Gemisch von Fettalkylresten mit 12 bis 18 C-Atomen, R² ein n-Butylrest und n im Mittel die Zahl 9 bedeutet.

Die Kompatibilität der erfindungsgemäß einzusetzenden PAO-Verbindungen mit handelsüblichen Elektrotauchlacken wurde durchweg positiv beurteilt. Die entsprechenden Beurteilungen wurden so durchgeführt, daß dabei Glasplatten mit Aufziehrahmen beschichtet wurden. Als Qualitätskriterium für die Beschichtung wurde dabei die Neigung zur Kraterbildung und die Verlaufeigenschaften qualitativ beurteilt. Insbesondere wurde für PAO-Verbindungen der o.g. allgemeinen Formel (I) eine ausgezeichnete Kompatibilität mit handelsüblichen Elektrotauchlacken festgestellt. Insbesondere wurden die Beschichtungen, die beim Einsatz von Elektrotauchlackbädern mit einem Gehalt an dem o.g. Entschäumer E-1 als qualitativ hochwertig eingestuft.

## Patentansprüche

1. Verfahren zur Beschichtung elektrisch leitfähiger Substrate, bei dem das Substrat in ein wäßriges Elektrotauchlackbad, das mindestens ein kathodisch abscheidbares Kunstharz enhält, eingetaucht wird, das Substrat als Kathode geschaltet wird, durch Gleichstrom ein Film auf dem Substrat abgeschieden wird, das Substrat aus dem Elektrotauchlack entfernt wird und der abgeschiedene Lackfilm eingebrannt wird, dadurch gekennzeichnet, daß man dem Elektrotauchlackbad zur Kontrolle der Schaumbildung Polyalkylenoxid-Verbindungen, die eine Löslichkeit von mehr als 50 Gewichtsteilen in 100 Gewichtsteilen Wasser bei 25 °C aufweisen, zusetzt, wobei man als Polyalkylenoxid-Verbindungen Polyalkylenglykole einsetzt, deren Oxyalkylgruppen 2 bis 4 C-Atome enthalten und deren OH-Endgruppen mit Carbonsäuren verestert oder mit Alkyl- oder Methylarylgruppen verethert sind.

2. Verfahren nach Anspruch 1, wobei man solche Polyoxyalkylen-Verbindungen einsetzt, die durch die allgemeine Formel (I)
R¹ - O - (CH₂CH₂O)ₙ - R² (I)
worin R¹ einen geradkettigen oder verzweigten Alkylrest oder Alkenylrest mit 8 bis 18 C-Atomen, R² einen Alkylrest mit 4 bis 8 C-Atomen und n eine Zahl von 7 bis 30, bedeuten, charakterisiert sind.

3. Verfahren nach einem der Ansprüche 1 bis 2, dadurch gekennzeichnet, daß die als Entschäumer eingesetzten Polyalkylenoxid-Verbindungen in Mengen von 0.01 bis 15 Gew.-% bezogen auf die Festkörperanteile enthalten sind.

4. Elektrotauchlackbäder, enthaltend als Entschäumer endgruppenverschlossene Polyalkylenoxid-Verbindungen mit einer Löslichkeit bei 25°C von mehr als 50 Gewichtsteilen in 100 Gewichtsteilen Wasser, wobei man als Polyalkylenoxid-Verbindungen Polyalkylenglykole einsetzt, deren Oxyalkylgruppen 2 bis 4 C-Atome enthalten und deren OH-Endgruppen mit Carbonsäuren verestert oder mit Alkyl- oder Methylarylgruppen verethert sind.

5. Elektrotauchlackbäder nach Anspruch 4, wobei die Polyalkylenoxid-Verbindungen durch die allgemeine Formel (I)
R¹ - O - (CH₂CH₂O)ₙ - R² (I)
worin R¹ einen geradkettigen oder verzweigten Alkylrest oder Alkenylrest mit 8 bis 18 C-Atomen, R² einen Alkylrest mit 4 bis 8 C-Atomen und n eine Zahl von 7 bis 30 bedeuten, charakterisiert sind.

6. Elektrotauchlackbäder nach Anspruch 4 oder 5, wobei der Entschäumer in Mengen von 0,01 bis 15 Gew.-% bezogen auf die Festkörperanteile enthalten ist.

7. Verwendung von Polyalkylenoxid-Verbindungen gemäß einem der Ansprüche 1 bis 3, die eine Löslichkeit von mehr als 50 Gewichtsteilen in 100 Gewichtsteilen Wasser bei 25 °C aufweisen, zur Kontrolle der Schaumbildung in Elektrotauchlackbädern bei der kationischen elektrophoretischen Beschichtung.

## Claims

1. A process for coating electrically conductive substrates, in which the substrate is immersed in a water-based electrophoretic coating bath containing at least one cathodically depositable synthetic resin, the substrate is connected as the cathode, a film is deposited on the substrate by application of direct current, the substrate is removed from the electrophoretic coating bath and the deposited lacquer film is stoved, characterized in that polyalkylene oxide compounds with a solubility of more than 50 parts by weight in 100 parts by weight of water at 25°C are added to the electrophoretic coating bath to control foaming, polyalkylene glycols of which the oxyalkyl groups contain 2 to 4 carbon atoms and of the terminal OH groups are esterified with carboxylic acids or etherified with alkyl or methyl aryl groups being used as the polyalkylene oxide compounds.

2. A process as claimed in claim 1, in which polyoxyalkylene compounds corresponding to general formula (I):
R¹-O-(CH₂CH₂O)ₙ-R² (I)
in R¹ is a linear or branched alkyl or alkenyl group containing 8 to 18 carbon atoms, R² is an alkyl group containing 4 to 8 carbon atoms and n is a number of 7 to 30, are used.

3. A process as claimed in claim 1 or 2, in which the polyalkylene oxide compounds used as defoamers are present in quantities of 0.01 to 15% by weight, based on the solids content.

4. Electrophoretic coating baths containing end-capped polyalkylene oxide compounds with a solubility in water at 25°C of more than 50 parts by weight in 100 parts by weight of water as defoamers, polyalkylene glycols of which the oxyalkyl groups contain 2 to 4 carbon atoms and of the terminal OH groups are esterified with carboxylic acids or etherified with alkyl or methyl aryl groups being used as the polyalkylene oxide compounds.

5. Electrophoretic coating baths as claimed in claim 4, in which the polyalkylene oxide compounds correspond to general formula (I):
R¹-O-(CH₂CH₂O)ₙ-R² (I)
where R¹ is a linear or branched alkyl or alkenyl group containing 8 to 18 carbon atoms, R² is an alkyl group containing 4 to 8 carbon atoms and n is a number of 7 to 30.

6. Electrophoretic coating baths as claimed in claim 4 or 5, in which the defoamer is present in quantities of 0.01 to 15% by weight, based on the solids content.

7. The use of polyalkylene oxide compounds with a solubility in water of more than 50 parts by weight in 100 parts by weight of water at 25°C for controlling foaming in electrophoretic coating baths used for cationic electrophoretic coating.

## Revendications

1. Procédé de revêtement de substrats électriquement conducteurs, dans lequel on plonge le substrat dans un bain électrolytique aqueux de détrempe pour vernissage, qui contient au moins une résine synthétique se séparant à la cathode, on branche le substrat comme cathode, on dépose une pellicule sur le substrat par un courant régulier, on retire le substrat du vernis électrolytique de détrempe et on soumet à une cuisson la pellicule de vernis déposée,
caractérisé en ce qu'
on ajoute au bain électrolytique de détrempe pour vernissage, pour réguler la formation de mousse, des composés oxyde de polyalkylène présentant une solubilité supérieure à 50 parties en poids dans 100 parties en poids d'eau à 25°C, opération dans laquelle on utilise comme composés oxydes de polyalkylène des polyalkylène glycols dont les groupes oxyalkyle contiennent 2 à 4 atomes de carbone et dont les groupes d'extrémité OH sont estérifiés avec des acides carboxyliques ou sont éthérifiés avec des groupes alkyle ou méthylaryle.

2. Procédé selon la revendication 1,
dans lequel
on utilise des composés polyoxyalkylène qui sont caractérisés par la formule générale (I)
R¹-O-(CH₂CH₂O)ₙ-R² (I)
dans laquelle R¹ représente un radical aryle ou un radical alcényle à chaîne droite ou ramifiée comportant de 8 à 18 atomes de carbone, R² représente un radical alkyle comportant de 4 à 8 atomes de carbone et n est un nombre allant de 7 à 30.

3. Procédé selon l'une des revendications 1 à 2,
caractérisé en ce que
les composés oxydes de polyalkylène utilisés comme antimousse sont contenus à des quantités de 0,01 à 15 % en poids par rapport à la fraction solide.

4. Bains électrolytiques de détrempe pour vernissage contenant comme antimousse des composés oxydes de polyalkylène bloqués à leur groupe d'extrémité et présentant une solubilité, à 25°C, supérieure à 50 parties en poids dans 100 parties en poids d'eau, où on utilise comme composés oxydes de polyalkylène des polyalkylène glycols dont les groupes oxyalkyle contiennent de 2 à 4 atomes de carbone et dont les groupes d'extrémité OH sont estérifiés avec des acides carboxyliques ou éthérifiés avec des groupes alkyle ou méthylaryle.

5. Bains électrolytiques de détrempe pour vernissage selon la revendication 4,
dans lesquels
les composés polyoxyalkylène sont caractérisés par la formule générale (I)
R¹-O-(CH₂CH₂O)ₙ-R² (I)
dans laquelle R¹ représente un radical aryle ou un radical alcényle à chaîne droite ou ramifiée comportant de 8 à 18 atomes de carbone, R² représente un radical alkyle comportant de 4 a 8 atomes de carbone et n est un nombre allant de 7 à 30.

6. Bains électrolytiques de détrempe pour vernissage selon la revendication 4 à 5,
dans lesquels
l'antimousse est contenu à des quantités de 0,01 à 15 % en poids par rapport à la fraction solide.

7. Utilisation de composés oxydes de polyalkylène selon l'une des revendications 1 à 3 qui présente une solubilité supérieure à 50 parties en poids dans 100 parties en poids d'eau à 25°C, pour la régulation de la formation de mousse dans les bains électrolytiques de détrempe pour vernissage au cours d'une opération d'enduction électrophorétique cationique.
